# EUROPEAN PATENT APPLICATION

(11) **EP 4 513 693 A1**
(43) Date of publication of application: **26.02.2025**
(21) Application number: 24195386.8
(22) Date of filing: 20.08.2024
(51) Int. Cl.: H02G 3/06, H02G 15/013

(54) **FITTING CONFIGURED TO CONNECT AND TRANSITION INTO A CONDUIT BODY**

(30) Priority: 21.08.2023 US 202363520775 P
(71) Applicant: Robroy Industries - Texas, LLC, Gilmer, TX 75644 (US)
(72) Inventor: Voelzke, Steven A., Longview, 75605 (US); Stricklin, Tabitha, Forney, 75126 (US)
(74) Representative: Forresters IP LLP

(57) **Abstract**

A fitting includes a first end having a first threaded portion configured for connection to a coupling device; a second end having a second threaded portion configured for connection to a conduit body; a hollow core extending from the first end to the second end; a flange surface provided between the first end and the second end and configured to interact with a gasket and the coupling device to create a sealed connection; and a shoulder extending from the flange surface to a center portion and the center portion extending to the second threaded portion. A combination of the shoulder and the center portion allow for play with regard to a rotational position of the center portion while an enhanced engagement and sealed connection is maintained between the fitting and the conduit body. A conduit system including a fitting is also disclosed.

## Description

### CROSS REFERENCE TO RELATED APPLICATION

This application claims the benefit of U.S. Provisional Patent Application No. 63/520,775, which was filed August 21, 2023, the disclosure of which is incorporated by reference herein in its entirety.

### FIELD OF THE DISCLOSURE

The present disclosure relates to a fitting in a conduit system and, more specifically, to a liquid tight or cable gland fitting in a conduit system, configured to connect and transition from into a conduit body.

### DESCRIPTION OF RELATED ART

Conduit is a well-known protective covering and routing path for use with electrical wire and cable in both industrial and commercial applications. Electrical installments utilizing conduit typically include lengths of conduit connected to various types of electrical boxes, conduit bodies, conduit fittings, and devices. Conduit is offered in a variety of metal, plastic, and composite materials, and is selected based on the needs of a particular application. For example, conduit is used in a multitude of industries to form "raceways" that shield and protect electrical wires and cables that provide power and control to machines, receptacles, and appliances. For examples, conduit may be used in food processing facilities, industrial factories, commercial kitchens, or similar facilities. A multitude of governing bodies exist which promulgate regulations requiring that conduit used in specific applications meets certain minimum requirements.

In certain applications, it is necessary for conduit to form a seal with connected electrical boxes, conduit bodies, and/or conduit fittings to form an environmental barrier between the internal volume of the conduit and the outside environment.

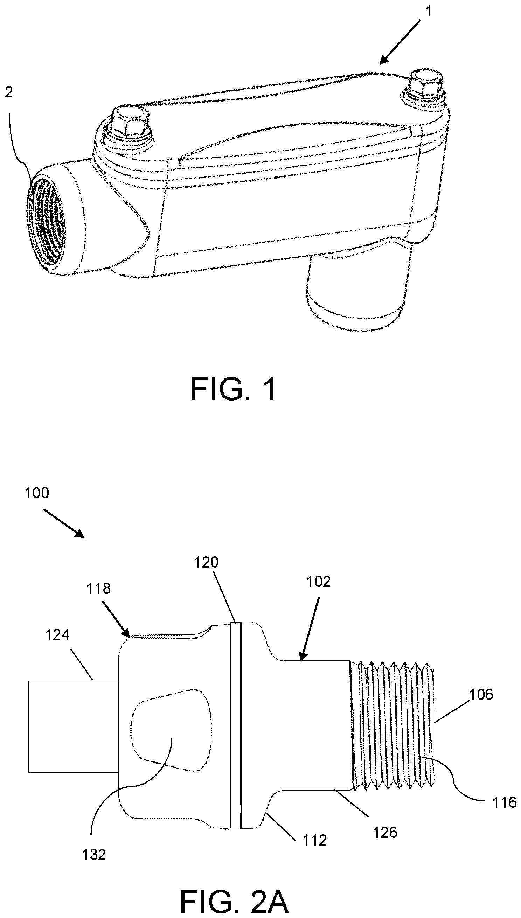

However, a system is only as strong as its weakest link. Connections and joints in particular are locations that offer an opportunity for failure of a system due to intrusion into a system, or disengagement of components. Particularly, connection points may be susceptible to intrusions or disconnection of components due to inadequate fit of fittings or connection at joints cause by use of components that are less compatible. This may occur where two variations of systems are combined at a connection point. For example, this may occur where such a connection is made between a flexible liquid-tight conduit, and a conduit body. More specifically, and with reference to FIG. 1, when a conduit (not shown) is connected to a conduit fitting, such as a conduit body 1, via a fitting such as a liquid-tight fitting, threaded engagement may be imperfect due to the design of the fitting having an intended use for a box, and an inability to sufficiently engage internal threads 2 and form a sealed connection with conduit body 1.

A variety of solutions exist to form sufficient connections at joints. However, such currently available systems suffer from various deficiencies and do not adequately connect less compatible components such as liquid-tight conduit to conduit bodies. Further, these solutions restrict system layout as they dictate rotational position of angled fittings, such as 90 degree elbows/fittings, by requiring a threaded connection to a predetermined depth to ensure a sufficient engagement, connection or seal has been made.

In view of the foregoing, there exists a need for a fitting in a conduit system and, more specifically, to a liquid tight or cable gland fitting in a conduit system, configured to connect and transition into a conduit body.

### SUMMARY OF THE INVENTION

Accordingly, aspects of the present disclosure are directed to non-limiting embodiments of a fitting for a conduit system and, more specifically, to a liquid tight or cable gland fitting in a conduit system, configured to connect and transition into a conduit body. Aspects of the present disclosure are also directed to a conduit system including such a fitting.

According to an aspect of the disclosure, a fitting for a conduit system includes a first end having a first threaded portion configured for connection to a coupling device; a second end having a second threaded portion configured for connection to a conduit body; a hollow core extending from the first end to the second end; a flange surface provided between the first end and the second end with the flange surface configured to interact with a gasket and the coupling device to create a sealed connection; and a shoulder extending from the flange surface to a center portion and the center portion extending to the second threaded portion. A combination of the shoulder and the center portion allow for play with regard to a rotational position of the center portion while a sealed connection is maintained between the fitting and the conduit body.

According to another aspect of the present disclosure, a conduit system includes: one of a rigid conduit, a flexible conduit, or a cable; a conduit body; and a fitting. The fitting may include: a first end having a first threaded portion configured for connection to a coupling device; a second end having a second threaded portion configured for connection to the conduit body; a hollow core extending from the first end to the second end; a flange surface provided between the first end and the second end with the flange surface configured to interact with a gasket and the coupling device to create a sealed connection; and a shoulder extending from the flange surface to a center portion and the center portion extending to the second threaded portion. A combination of the shoulder and the center portion may allow for play with regard to a rotational position of the center portion while a sealed connection is maintained between the fitting and the conduit body.

Non-limiting illustrative examples of the embodiments of the present disclosure will now be described in the following numbered clauses.

Clause 1: A fitting for a conduit system, the fitting comprising: a first end having a first threaded portion, the first threaded portion configured for connection to a coupling device; a second end having a second threaded portion, the second threaded portion configured for connection to a conduit body; a hollow core extending from the first end to the second end; a flange surface provided between the first end and the second end, the flange surface configured to interact with a gasket and the coupling device to create a sealed connection; and a shoulder extending from the flange surface to a center portion and the center portion extending to the second threaded portion, wherein a combination of the shoulder and the center portion allow for play with regard to a rotational position of the center portion while a sealed connection is maintained between the fitting and the conduit body.

Clause 2: The fitting of clause 1, wherein the fitting is configured to form a sealed connection between a rigid or flexible conduit connected to the coupling device and the conduit body.

Clause 3: The fitting of clause 2, wherein the sealed connection establishes an environmental rating.

Clause 4: The fitting of any one of clauses 1-3, wherein the fitting is configured to form a sealed connection between a cable connected to the coupling device and the conduit body.

Clause 5: The fitting of clause 4, wherein the sealed connection establishes an environmental rating.

Clause 6: The fitting of any one of clauses 1-5, wherein the center portion is cylindrical and straight.

Clause 7: The fitting of any one of clauses 1-6, wherein the center portion includes an angle.

Clause 8: The fitting of clause 7, wherein the angle is 90 degrees.

Clause 9: The fitting of any one of clauses 1-8, wherein the second end and internal threading of the conduit body are concentric about an axis, and a sealed connection is maintained between the fitting and the conduit body for any rotational position of the fitting with respect to the internal threading about the axis.

Clause 10: The fitting of any one of clauses 1-9, wherein the hollow core has an inner surface extending from the flange surface to the second end, and wherein the inner surface includes striations.

Clause 11: The fitting of any one of clauses 1-10, wherein the shoulder comprises a taper from the flange surface to the center portion, and wherein the taper includes a linear taper, a radius, or a curved profile.

Clause 12: A conduit system, comprising: one of a rigid conduit, a flexible conduit, or a cable; a conduit body; and a fitting, the fitting comprising: a first end having a first threaded portion, the first threaded portion configured for connection to a coupling device; a second end having a second threaded portion, the second threaded portion configured for connection to the conduit body; a hollow core extending from the first end to the second end; a flange surface provided between the first end and the second end, the flange surface configured to interact with a gasket and the coupling device to create a sealed connection; and a shoulder extending from the flange surface to a center portion and the center portion extending to the second threaded portion, wherein a combination of the shoulder and the center portion allow for play with regard to a rotational position of the center portion while a sealed connection is maintained between the fitting and the conduit body

Clause 13: The conduit system of clause 12, wherein the fitting is configured to form a sealed connection between the rigid conduit, the flexible conduit, or the cable and the conduit body.

Clause 14: The conduit system of clauses 12 or 13, wherein the rigid or flexible conduit is a metallic conduit, a non-metallic conduit, a coated conduit or a portion of a conduit.

Clause 15: The conduit system of any one of clauses 12-14, wherein the center portion is cylindrical and straight or wherein the center portion includes an angle.

Clause 16: The conduit system of any one of clauses 12-15, wherein the second end of the fitting and internal threading of the conduit body are concentric about an axis, and an enhanced engagement and sealed connection is maintained between the fitting and the conduit body for any rotational position of the fitting with respect to the internal threading about the axis.

Clause 17: The conduit system of clause 16, wherein the sealed connection establishes an environmental rating.

Further details and advantages of the various examples described in detail herein will become clear upon reviewing the following detailed description of the various examples in conjunction with the accompanying drawing figures.

### BRIEF DESCRIPTION OF THE DRAWINGS

Additional advantages and details are explained in greater detail below with reference to the exemplary embodiments that are illustrated in the accompanying schematic figures, in which:
FIG. 1 is a perspective view of an example of a conduit body of a conduit system with which a fitting in accordance with present disclosure may interact.
FIG. 2A is a side view of a non-limiting embodiment of a fitting in accordance with the present disclosure;
FIG. 2B is a perspective view of a non-limiting embodiment of a fitting in accordance with the present disclosure;
FIG. 2C is an exploded perspective view of a non-limiting embodiment of a fitting in accordance with the present disclosure;
FIG. 3A is a side view of a non-limiting embodiment of a conduit system including a fitting in accordance with the present disclosure;
FIG. 3B is a side sectional view of a non-limiting embodiment of a conduit system including a fitting in accordance with the present disclosure;
FIG. 4A is a side view of another non-limiting embodiment of a fitting in accordance with the present disclosure;
FIG. 4B is a side view of a portion of the fitting of FIG. 4A;
FIG. 4C is a perspective view of the fitting of FIG. 4A;
FIG. 5A is a side view of another non-limiting embodiment of a conduit system including a fitting in accordance with the present disclosure; and
FIG. 5B is a side sectional view of the conduit system of FIG. 5A.

Corresponding reference characters indicate corresponding parts throughout the several views. The exemplifications set out herein illustrate exemplary embodiments of the disclosure, and such embodiment are not to be construed as limiting the scope of the disclosure in any manner.

### DETAILED DESCRIPTION

It is to be understood that the present disclosure may assume various alternative variations and step sequences, except where expressly specified to the contrary. It is also to be understood that the specific devices and processes illustrated in the attached drawings, and described in the following specification, are simply exemplary and non-limiting embodiments or aspects. Hence, specific dimensions and other physical characteristics related to the embodiments or aspects disclosed herein are not to be considered as limiting.

For purposes of the description hereinafter, the terms "end," "upper," "lower," "right," "left," "vertical," "horizontal," "top," "bottom," "lateral," "longitudinal," and derivatives thereof shall relate to embodiments or aspects as they are oriented in the drawing figures. However, it is to be understood that embodiments or aspects may assume various alternative variations and step sequences, except where expressly specified to the contrary. It is also to be understood that the specific devices and processes illustrated in the attached drawings, and described in the following specification, are simply non-limiting exemplary embodiments or aspects. Hence, specific dimensions and other physical characteristics related to the embodiments or aspects of the embodiments or aspects disclosed herein are not to be considered as limiting unless otherwise indicated.

No aspect, component, element, structure, act, step, function, instruction, and/or the like used herein should be construed as critical or essential unless explicitly described as such. Also, as used herein, the articles "a" and "an" are intended to include one or more items, and may be used interchangeably with "one or more" and "at least one." As used in the specification and the claims, the singular form of "a," "an," and "the" include plural referents, such as unless the context clearly dictates otherwise. Where only one item is intended, the term "one" or similar language is used. Also, as used herein, the terms "has," "have," "having," or the like are intended to be open-ended terms. Further, the phrase "based on" is intended to mean "based at least partially on" unless explicitly stated otherwise. Further, the phrase "based on" is intended to mean "based at least partially on" unless explicitly stated otherwise.

Embodiments of the present disclosure are directed to a fitting for a conduit system and, more specifically, to a liquid tight or cable gland fitting configured to connect and transition into a conduit body. A fitting according to the present disclosure may include a first end having a first threaded portion configured for connection to a coupling device; a second end having a second threaded portion configured for connection to a conduit body; a hollow core extending from the first end to the second end; a flange surface provided between the first end and the second end with the flange surface configured to interact with a gasket and the coupling device to create a sealed connection; and a shoulder extending from the flange surface to a center portion and the center portion extending to the second threaded portion. A combination of the shoulder and the center portion allow for play with regard to a rotational position of the center portion while a sealed connection is maintained between the fitting and the conduit body.

The fitting may be configured to form a sealed connection between a rigid or flexible conduit connected to the coupling device and the conduit body. The sealed connection may be configured to establish an environmental rating. The fitting may be configured to form a sealed connection between a cable connected to the coupling device and the conduit body. The sealed connection may be configured to establish an environmental rating. The center portion may be cylindrical and straight or it may include an angle, such as a 90 degree angle. In some non-limiting embodiments, the second end and internal threading of the conduit body may be concentric about an axis, and a sealed connection may be maintained between the fitting and the conduit body for any rotational position of the fitting with respect to the internal threading about the axis. The hollow core may have an inner surface extending from the flange surface to the second end, and the inner surface may include striations. In certain non-limiting embodiments, the shoulder may comprise a taper from the flange surface to the center portion, and the taper may include a linear taper, a radius, or a curved profile.

Embodiments of the present disclosure are also directed to a conduit system including such a fitting. A conduit system according to the present disclosure may include: one of a rigid conduit, a flexible conduit, or a cable; a conduit body; and a fitting. The fitting may include: a first end having a first threaded portion configured for connection to a coupling device; a second end having a second threaded portion configured for connection to the conduit body; a hollow core extending from the first end to the second end; a flange surface provided between the first end and the second end with the flange surface configured to interact with a gasket and the coupling device to create a sealed connection; and a shoulder extending from the flange surface to a center portion and the center portion extending to the second threaded portion. A combination of the shoulder and the center portion may allow for play with regard to a rotational position of the center portion while a sealed connection is maintained between the fitting and the conduit body.

The fitting may be configured to form a sealed connection between the rigid conduit, the flexible conduit, or the cable and the conduit body. The rigid or flexible conduit may be a metallic conduit, a non-metallic conduit, a coated conduit or a portion of a conduit. The center portion may be cylindrical and straight or the center portion may include an angle. The second end of the fitting and internal threading of the conduit body may be concentric about an axis, and an enhanced engagement and sealed connection may be maintained between the fitting and the conduit body for any rotational position of the fitting with respect to the internal threading about the axis. The sealed connection may be configured to establish an environmental rating.

In this way, embodiments of the present disclosure allow for connecting a conduit to a conduit body and forming a sealed connection at a connection point between the conduit and the conduit body.

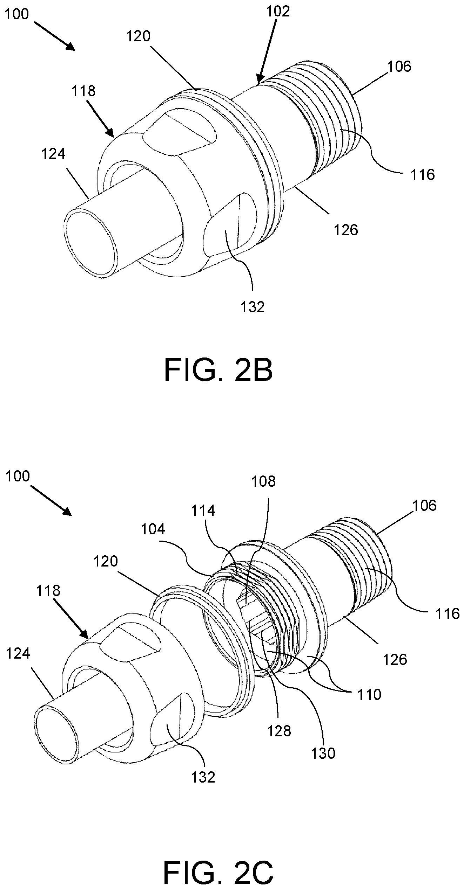

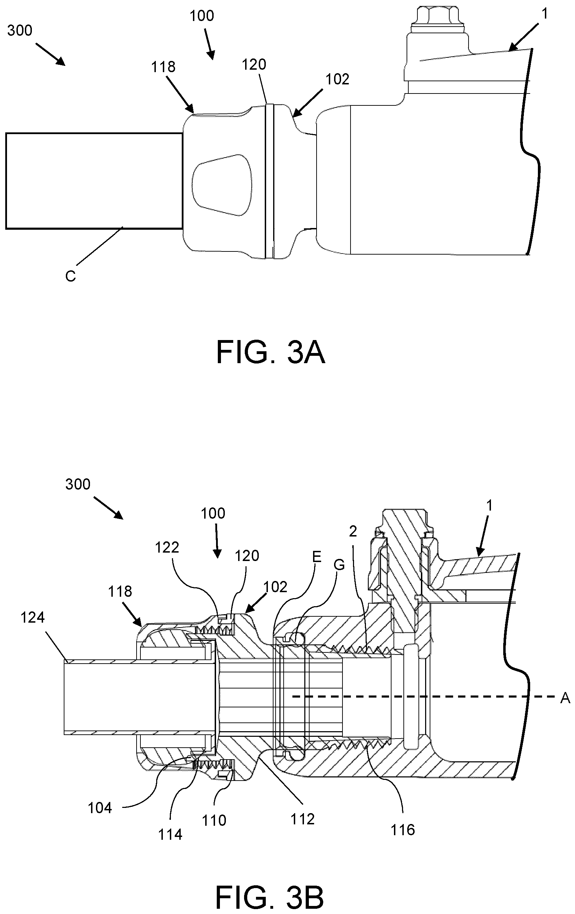

Referring now to FIG. 1, FIG. 1 is a perspective view of an example of conduit body 1 of a conduit system with which a fitting (not shown) in accordance with present disclosure may interact. A fitting in accordance with the present disclosure (e.g., fitting 100 as shown in FIGS. 2A-2C) may interact with conduit body 1 of FIG. 1A in a conduit system (e.g., conduit system 300 as shown in FIGS. 3B and 3C) of the present disclosure to form a sealed connection. In some non-limiting embodiments, a fitting may interact with conduit fitting 1 at a connection point to form a sealed connection.

Referring now to FIGS. 2A-2C, FIGS. 2A-2C are a side view, a profile view, and an exploded perspective view of a non-limiting embodiment of fitting 100 in accordance with the present disclosure. As shown in FIGS. 2A-2C, fitting 100 may include body 102. Body 102 may include first end 104, second end 106, hollow core 108, flange surface 110, shoulder 112, first threaded portion 114, and second threaded portion 116. As further shown in FIGS. 2A-2C, fitting 100 may include a coupling device, such as domed nut 118, gasket 120, and tube 124. Additionally, as shown in FIG. 3B, gasket 120 may be configured to be received by recess 122 of domed nut 118. In some non-limiting embodiments, as shown in FIGS. 2A-2C, domed nut 118 may include a plurality of gripping features 132 configured to receive a tool (not shown) such as a wrench, pliers, or another tool for gripping. Further, tube 124 may be configured to interact with domed nut 118 and first end 104 of body 102 for connection to a rigid or flexible conduit (e.g., conduit C as shown in FIG. 3A).

As shown in FIGS. 2A-2C, first threaded portion 114 may be configured for connection to domed nut 118 and, second threaded portion 116 may be configured for connection to a conduit body, such as conduit body 1 shown in FIG. 1 or conduit body 1 shown in FIGS. 3A and 3B. As further shown in FIGS. 2A-2C, gasket 120 may interact with domed nut 118 and flange surface 110 to create a sealed connection. In some non-limiting embodiments, gasket 120 may be a sealing ring or an O-ring. In some non-limiting embodiments, gasket 120 may be made of polymeric material such as polyvinyl chloride (PVC) or ethylene propylene diene terpolymer (EPDM) or another polymeric material.

In some non-limiting embodiments, fitting 100 may be configured to form a sealed, liquid tight, connection between rigid or flexible conduit and a conduit body. Accordingly, some embodiments of a fitting 100 according to the present disclosure may be a liquid tight fitting. In some non-limiting embodiments, body 102 further includes center portion 126 extending between shoulder 112 and second threaded portion 116. In some non-limiting embodiments, as shown in FIGS. 2A-2C, center portion 126 is cylindrical and straight. In such an embodiment where the center portion is cylindrical and straight, a fitting according to the present disclosure may be a liquid tight straight fitting. In some non-limiting embodiments, a center portion such as center portion 126 may include an angle. In some non-limiting embodiments, where a center portion includes an angle, the angle may be a 90 degree angle. In such an embodiment where a center portion includes a 90 degree angle, a fitting according to the present disclosure may be a liquid tight 90 degree fitting. In other non-limiting embodiments, the angle may be 45 degrees, 60 degrees, or another angle.

In some non-limiting embodiments, second end 106 of fitting 100 and internal threading 2 of conduit body 1 may be concentric about an axis A, and a sealed connection may be maintained between fitting 100 and conduit body 1 for any rotational position of fitting 100 with respect to internal threading 2 of conduit body 1 about axis A. When the center portion 126 includes an angle, the combination of the shoulder 112 and the center portion 126 provided prior to the second threaded portion 116 allow for a certain amount of play with regard to the rotational position of the center portion 126 while still providing a sufficient connection between the fitting 100 and the conduit body 1. Accordingly, the fitting 100 allows for a greater number of layouts. In addition, the combination of the shoulder 112 and center portion 126 forms an environmental barrier between the internal volume of the conduit and the outside environment, thereby allowing the fitting 100 to achieve and environmental rating. Still further, the fitting 100 of the present disclosure allows for an enhanced engagement between the second threaded portion 116 of the fitting 100 and the internal threading 2 of the conduit body 1 since a greater number of threads of the second threaded portion 116 are engaged with the internal threading 2 of the conduit body 1. With this enhanced thread engagement, in certain configurations, the fitting 100 offers improved electrical continuity of the metal conduit system leading to enhanced grounding of the system. For example, where fitting 100 is implemented in a system and a flexible conduit with a stainless-steel core is engaged with fitting 100, fitting 100 may provide additional engagement of the respective threads. This arrangement may in turn provide enhanced grounding and thus environmental protection and safety to the system and users thereof.

In some non-limiting embodiments, as shown in FIG. 2C, body 102 may include inner surface 128, and inner surface 128 may include striations 130.

In some non-limiting embodiments, body 102 may include a metal such as stainless steel or aluminum and/or polymeric material.

Referring now to FIGS. 3A and 3B, FIGS. 3A and 3B are a side view and a side sectional view of a non-limiting embodiment of a conduit system 300 including fitting 100 in accordance with the present disclosure. As shown in FIG. 3A, fitting 100 may be configured to form a sealed connection between rigid or flexible conduit C and conduit body 1. In some non-limiting embodiments, the sealed connection may be a liquid tight connection. In some non-limiting embodiments, tube 124 may interact with domed nut 118 and first end 104 of body 102 for connection to a conduit C. In some non-limiting embodiments, conduit C may be a rigid conduit, a flexible conduit, a metallic conduit, a non-metallic conduit, a coated conduit or a portion of a conduit.

In some non-limiting embodiments, as shown in FIG. 3B, shoulder 112 may include a taper from flange surface 110 to second threaded portion 116. In some non-limiting embodiments, the taper may include a linear taper, a radius, or a curved profile. In some non-limiting embodiments, shoulder 112 may be configured to interact with an edge E and a gasket G of conduit body 1. The connection between fitting 100 and conduit body 1, where second threaded portion 116 is connected to conduit body 1, such as by threaded engagement, and where shoulder 112 interacts with edge E and gasket G, allows a proper joint and mate between fitting 100 and conduit body 1. Accordingly, a reliable sealed connection is formed and disconnection is avoided.

In some non-limiting embodiments, conduit system 300 may include a rigid or flexible conduit C, a fitting 100, and a conduit body 1.

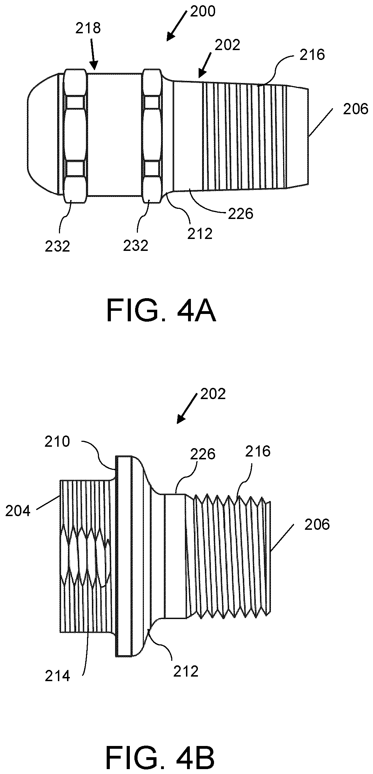

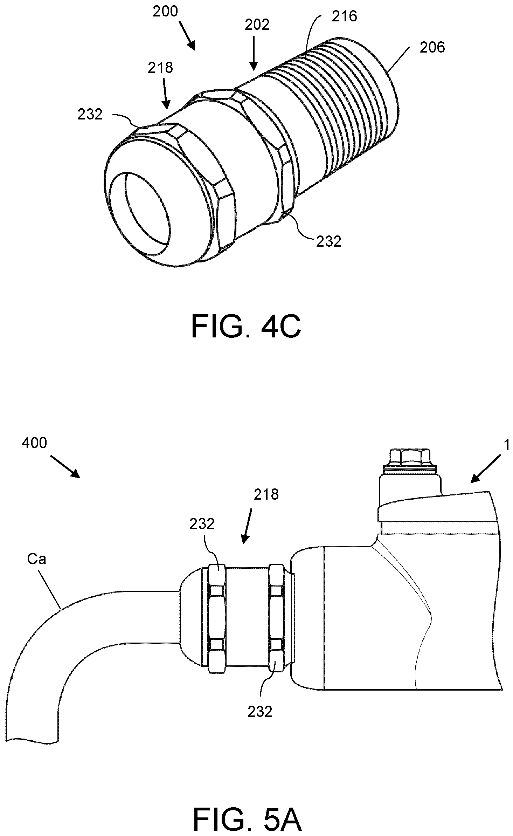

Referring now to FIGS. 4A-4C, FIGS. 4A-4C are a side view, a side view of a portion, and a perspective view of another non-limiting embodiment of fitting 200 in accordance with the present disclosure. As shown in FIGS. 4A-4C, fitting 200 may include body 202. Body 202 may include first end 204, second end 206, hollow core (not shown), flange surface 210, shoulder 212, first threaded portion 214, and second threaded portion 216. As further shown in FIGS. 4A and 4C, fitting 200 may include a coupling device, such as cable connector 218. In some non-limiting embodiments, as shown in FIGS. 4A and 4C, cable connector 218 may include a plurality of gripping features 232 configured to receive a tool (not shown) such as a wrench, pliers, or another tool for gripping. Further, cord connector 218 may be configured for connection to a cable (e.g., cable Ca as shown in FIG. 5A).

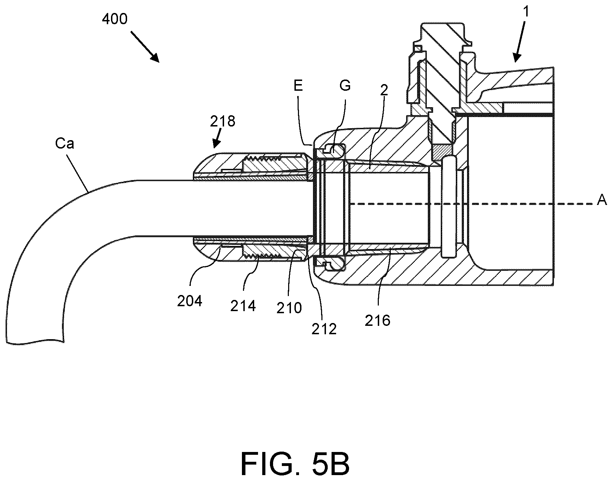

First threaded portion 214 may be configured for connection to cable connector 218 and, second threaded portion 216 may be configured for connection to a conduit body, such as conduit body 1 shown in FIGS. 5A and 5B. In some non-limiting embodiments, fitting 200 may be configured to form a sealed connection between a cable and a conduit body. In some non-limiting embodiments, body 202 further includes center portion 226 extending between shoulder 212 and second threaded portion 216. In some non-limiting embodiments, as shown in FIGS. 4A-4C, center portion 226 is cylindrical and straight. In such an embodiment where the center portion is cylindrical and straight, a fitting according to the present disclosure may be a straight fitting. In some non-limiting embodiments, a center portion such as center portion 226 may include an angle. In some non-limiting embodiments, where a center portion includes an angle, the angle may be a 90 degree angle. In such an embodiment where a center portion includes a 90 degree angle, a fitting according to the present disclosure may be a 90 degree fitting. In other non-limiting embodiments, the angle may be 45 degrees, 60 degrees, or another angle.

In some non-limiting embodiments, second end 206 of fitting 200 and internal threading 2 of conduit body 1 may be concentric about an axis A, and a sealed connection may be maintained between fitting 200 and conduit body 1 for any rotational position of fitting 200 with respect to internal threading 2 of conduit body 1 about axis A. When the center portion 226 includes an angle, the combination of the shoulder 212 and the center portion 226 provided prior to the second threaded portion 216 allow for a certain amount of play with regard to the rotational position of the center portion 226 while still providing a sufficient connection between the fitting 200 and the conduit body 1. Accordingly, the fitting 200 allows for a greater number of layouts. In addition, the combination of the shoulder 212 and center portion 226 forms an environmental barrier between the internal volume of the conduit and the outside environment, thereby allowing the fitting 200 to achieve and environmental rating.

Referring now to FIGS. 5A and 5B, FIGS. 5A and 5B are a side view and a side sectional view of a non-limiting embodiment of a conduit system 400 including fitting 200 in accordance with the present disclosure. As shown in FIG. 5A, fitting 200 may be configured to form a sealed connection between cable Ca and conduit body 1. In some non-limiting embodiments, cable connector 218 may interact with first end 204 of body 202 for connection to a cable Ca.

In some non-limiting embodiments, as shown in FIG. 5B, shoulder 212 may include a taper from flange surface 210 to second threaded portion 216. In some non-limiting embodiments, the taper may include a linear taper, a radius, or a curved profile. In some non-limiting embodiments, shoulder 212 may be configured to interact with an edge E and a gasket G of conduit body 1. The connection between fitting 200 and conduit body 1, where second threaded portion 216 is connected to conduit body 1, such as by threaded engagement, and where shoulder 212 interacts with edge E and gasket G, allows a proper joint and mate between fitting 200 and conduit body 1. Accordingly, a reliable sealed connection is formed and disconnection is avoided.

In some non-limiting embodiments, conduit system 400 may include a cable Ca, a fitting 200, and a conduit body 1.

While several examples of the fitting, and the conduit system are shown in the accompanying figures and described in detail hereinabove, other aspects will be apparent to, and readily made by, those skilled in the art without departing from the scope and spirit of the disclosure. Accordingly, the foregoing description is intended to be illustrative rather than restrictive. The invention described hereinabove is defined by the appended claims and all changes to the invention that fall within the meaning and range of equivalency of the claims are to be embraced within their scope.

## Claims

1. A fitting for a conduit system, the fitting comprising:
a first end having a first threaded portion, the first threaded portion configured for connection to a coupling device;
a second end having a second threaded portion, the second threaded portion configured for connection to a conduit body;
a hollow core extending from the first end to the second end;
a flange surface provided between the first end and the second end, the flange surface configured to interact with a gasket and the coupling device to create a sealed connection; and
a shoulder extending from the flange surface to a center portion and the center portion extending to the second threaded portion,
wherein a combination of the shoulder and the center portion allow for play with regard to a rotational position of the center portion while a sealed connection is maintained between the fitting and the conduit body.

2. The fitting of claim 1, wherein the fitting is configured to form a sealed connection between a rigid or flexible conduit connected to the coupling device and the conduit body, preferably wherein the sealed connection establishes an environmental rating.

3. The fitting of claim 1 or claim 2, wherein the fitting is configured to form a sealed connection between a cable connected to the coupling device and the conduit body.

4. The fitting of claim 3, wherein the sealed connection establishes an environmental rating.

5. The fitting of any preceding claim, wherein the center portion is cylindrical and straight.

6. The fitting of any preceding claim, wherein the center portion includes an angle, preferably wherein the angle is 90 degrees.

7. The fitting of any preceding claim, wherein the second end and internal threading of the conduit body are concentric about an axis, and a sealed connection is maintained between the fitting and the conduit body for any rotational position of the fitting with respect to the internal threading about the axis.

8. The fitting of any preceding claim, wherein the hollow core has an inner surface extending from the flange surface to the second end, and wherein the inner surface includes striations.

9. The fitting of any preceding claim, wherein the shoulder comprises a taper from the flange surface to the center portion, and wherein the taper includes a linear taper, a radius, or a curved profile.

10. A conduit system, comprising:
one of a rigid conduit, a flexible conduit, or a cable;
a conduit body; and
a fitting, the fitting comprising:
a first end having a first threaded portion, the first threaded portion configured for connection to a coupling device;
a second end having a second threaded portion, the second threaded portion configured for connection to the conduit body;
a hollow core extending from the first end to the second end;
a flange surface provided between the first end and the second end, the flange surface configured to interact with a gasket and the coupling device to create a sealed connection; and
a shoulder extending from the flange surface to a center portion and the center portion extending to the second threaded portion,
wherein a combination of the shoulder and the center portion allow for play with regard to a rotational position of the center portion while a sealed connection is maintained between the fitting and the conduit body.

11. The conduit system of claim 10, wherein the fitting is configured to form a sealed connection between the rigid conduit, the flexible conduit, or the cable and the conduit body.

12. The conduit system of claim 10 or claim 11, wherein the rigid or flexible conduit is a metallic conduit, a non-metallic conduit, a coated conduit or a portion of a conduit.

13. The conduit system of any of claims 10 to 12, wherein the center portion is cylindrical and straight or wherein the center portion includes an angle.

14. The conduit system of any of claims 10 to 13, wherein the second end of the fitting and internal threading of the conduit body are concentric about an axis, and an enhanced engagement and sealed connection is maintained between the fitting and the conduit body for any rotational position of the fitting with respect to the internal threading about the axis.

15. The conduit system of claim 14, wherein the sealed connection establishes an environmental rating.
